# DEMANDE DE BREVET EUROPEEN

(11) **EP 2 609 806 A1**
(43) Date de publication de la demande: **03.07.2013**
(21) Numéro de dépôt: 12199377.8
(22) Date de dépôt: 26.12.2012
(51) Int. Cl.: A01K 39/06

(54) **Parc de gavage pour palmipèdes**

(30) Priorité: 27.12.2011 FR 1162483
(71) Demandeur: Lur Berri, 64120 Aicirits Camou Suhast (FR); Fabricados Ganaderos S.A.L.(ETXEHOLZ), 31012 Pamplona (ES)
(72) Inventeur: Gemin, Olivier, 64120 Gabat (FR); Fernandez Eraso, Jesus, 31015 Pamplona (ES)
(74) Mandataire: Wagret, Frédéric

(57) **Abrégé**

Installation pour le gavage de palmipèdes, notamment des canards, comportant au moins un parc (7A, 7B) destiné à contenir plusieurs palmipèdes, chaque parc comportant une paroi avant (21A, 22A), une paroi arrière (11, 12), deux parois latérales (90A, 91A), et un plancher (31A, 32A), ledit parc étant susceptible d'être divisé en deux sous-parties, de volumes variables, chaque sous-partie représentant entre environ 0 et environ 100% du parc. Le parc comporte un panneau mobile (80) entre les deux parois latérales du parc, et qui présente une surface inférieure à celle des parois latérales, ledit panneau mobile étant mobile en translation suivant une direction transversale aux parois latérales, et en outre apte à passer d'un parc au suivant.

## Description

La présente invention concerne un parc de gavage de palmipèdes, notamment des canards, et plus précisément un enclos définissant un volume dans lequel sont placés un certain nombre de canards (typiquement entre 6 et 10) nourris régulièrement par un opérateur.

Une opération de gavage, de façon classique, suppose l'intervention d'un opérateur qui saisit un canard par le cou, et introduit dans son bec un manchon auquel est reliée, par un tuyau souple, une réserve d'aliments spécifiques (par exemple tel que du maïs en poudre mélangé à de l'eau). Le cou et le bec du canard sont sensiblement en alignement compte tenu de l'introduction du manchon d'alimentation. L'opération dure typiquement quelques secondes, voire une seconde ou deux.

Le canard est ensuite libéré et l'opérateur passe au canard suivant du parc.

La plupart des installations de gavage actuelles comportent des cages individuelles de dimensions 50 x 20 cm, le bec et le cou du canard dépassant pour être saisi par l'utilisateur.

Les recommandations européennes prévoient la suppression de ces cages individuelles et requièrent la mise en place de parcs de gavage, chaque parc formant une enceinte, délimitée par quatre côtés, et de dimension au sol suffisante pour satisfaire le bien être des animaux (Convention européenne T-AP du 22 juin 1999).

Certains exploitants ont mis en place des parcs alignés les uns à la suite des autres, deux parcs voisins étant séparés par une paroi latérale commune. Typiquement, ces parcs sont au nombre de 50 ou 100, disposés sur le sol d'un bâtiment qui est pourvu d'une part de moyens d'aération et de ventilation et d'autre part de moyens d'évacuation des déjections des animaux au sol. Ces dernières sont d'ailleurs réutilisées par l'exploitant à titre d'engrais.

Par ailleurs, on connait des parcs de gavage surélevés, dont la paroi inférieure horizontale est constituée d'une grille à maille serrée et sur lesquelles marchent les canards dans leur parc. Ceci permet de simplifier la récupération des déjections qui tombent sur le sol.

On comprend que les installations de parcs de gavage doivent répondre à des conditions différentes et antinomiques difficiles à concilier.

Les installations, surélevées, si elles permettent à l'opérateur de travailler debout, ne sont pas toutes aptes à être mise en place sur des installations déjà connues ou s'adapter à ces dernières en réalisant un minimum de transformation. Ceci représente un inconvénient majeur compte tenu du coût pour l'exploitant qui doit complètement démonter une installation existante, y compris les systèmes de récupération de déjections, pour mettre en place une installation nouvelle.

Par ailleurs, l'opération de gavage elle-même soulève plusieurs difficultés. Elle doit pouvoir être réalisée :
- En un temps très court (de 1 à 3 secondes, voire 5 grand maximum).
- Sans effaroucher ou au minimum l'animal en cours de gavage ;
- De manière à permettre à un opérateur de saisir un canard facilement dans le groupe de canards, qui en général est en état d'inquiétude relative compte tenu de l'approche de l'opérateur ;
- De façon à identifier et trier les canards qui ont été gavés, de ceux qui sont en attente de gavage, pour un parc donné. Ceci n'est pas anodin dans la mesure où un parc peut contenir jusqu'à 10 canards, qui sont a priori difficiles de distinguer les uns des autres.
- De manière à accéder au groupe de canards, sans avoir à se pencher, ou au contraire à plonger par-dessus l'installation, vers le bas. La position de l'opérateur est fondamentale car il doit réaliser plusieurs centaines d'actes de gavage, à un rythme relativement élevé.

Les installations et dispositifs de l'art antérieur ne répondent pas à l'ensemble de ces conditions et souffrent d'au moins un voire plusieurs inconvénient tels que ceux mentionnés ci-dessus.

La présente invention remédie à cette situation et propose un parc de gavage pour palmipèdes, permettant :
- une récupération aisée des déjections,
- une installation économique et avec des modifications mineures, sur une installation existante pour la remplacer,
- à l'opérateur de réaliser les opérations de gavage elles-mêmes de manière sûre, rapide et en entraînant un minimum d'inquiétude ou de stress pour les animaux, et le tout en attitude ou posture naturelles de l'opérateur, et en faisant appel à des gestes simples.

A cette fin, selon l'invention, l'installation pour le gavage de palmipèdes, notamment des canards, comportant au moins un parc destiné à contenir plusieurs palmipèdes, chaque parc comportant une paroi avant, une paroi arrière, deux parois latérales, et un plancher, est **caractérisé en ce que** ledit parc est susceptible d'être divisé en deux sous-parties, de volumes variables.

Avantageusement, chaque sous-partie représentant entre environ 0 et environ 100% du parc.

Plus précisément, le parc comporte un panneau mobile entre les deux parois latérales du parc.

De préférence, le panneau mobile est plein.

Le panneau mobile présente une surface inférieure à celle des parois latérales, de préférence inférieure à la moitié, et encore plus préféré, inférieure au quart de la surface des parois latérales.

Le panneau mobile se déplace en translation suivant une direction transversale aux parois latérales.

Son déplacement est réalisé, soit de manière automatique en fonction du déplacement de l'opérateur, ou soit déclenché par l'opérateur lui-même.

De manière avantageuse, il est prévu un seul panneau mobile séparateur pour l'ensemble des parcs successifs alignés de l'installation, ledit panneau mobile étant apte à passer d'un parc à l'autre.

Particulièrement, le passage du panneau mobile d'un parc à l'autre est réalisé par l'intermédiaire d'une ouverture prévue dans la paroi latérale correspondante commune à deux parcs successifs.

De manière préférentielle, l'ouverture a une hauteur très inférieure à l'une au moins des dimensions du panneau mobile.

Préférentiellement, le panneau mobile est monté à rotation sur l'un de ses bords, suivant un axe parallèle aux parois latérales et donc transversal à son avancement.

Ainsi, le panneau mobile, à l'approche ou au quasi contact d'une paroi latérale, subit un mouvement de rotation qui le place dans une position quasi horizontale, puis il est déplacé jusqu'à ce qu'il pénètre dans le parc voisin, pour revenir ensuite par rotation à sa position verticale.

Selon une autre caractéristique de l'invention, le parc comporte une paroi frontale mobile entre une position de gavage permettant à l'opérateur de réaliser l'opération de gavage et saisir les canards, et une position de repos, de manière à fermer le parc pour empêcher les canards de s'échapper.

Avantageusement, la paroi frontale est articulée sur un axe de rotation horizontal transversal aux deux parois latérales du parc.

Plus précisément, la paroi frontale est susceptible de pivoter entre une première position où elle est sensiblement verticale et ferme le parc, et une seconde position sensiblement horizontale où elle se situe au dessus du parc et couvre celui-ci.

Chaque parc est pourvu sur sa face frontale, outre ladite paroi frontale mobile, de deux barrières frontales, dont les dimensions en longueur (dans le plan de la paroi frontale) de chacune sont sensiblement inférieures à cette dernière et de l'ordre de 1/5^{ème} à ¼ de ladite longueur.

De préférence, une barrière est prévue de chaque côté du parc, dans le plan de la façade frontale, laissant ainsi, lorsque la paroi frontale mobile est en position relevée pour le gavage, un espace central libre pour l'opérateur.

Par ailleurs, l'installation comporte un abreuvoir central formé d'une gouttière unique, commune à l'ensemble des parcs alignés. La goulotte est accessible par les canards en étant située légèrement au dessus du niveau du plancher, à l'aplomb de la paroi arrière du parc.

Sur la goulotte est prévue une grille formée d'arceaux en U, parallèles et dont la concavité est tournée vers le bas.

La goulotte formant l'abreuvoir est montée à rotation selon un axe longitudinal, parallèle aux parois arrière et frontale du parc, de manière à permettre de la vider, de la laver et remplacer l'eau.

L'invention sera bien comprise à la lumière de la description qui suit se rapportant à des exemples illustratifs mais non limitatifs basée sur les dessins annexés dans lesquels :
La figure 1A montre un schéma d'une installation en vue de dessus comportant une série de parcs alignés et jointifs ;
La figure 1B montre une vue en perspective d'une partie de l'installation de la figure 1A ;
La figure 2A montre en perspective de dessus un parc et les parcs voisins, pour une première position fermée de la paroi frontale ;
La figure 2B est une vue similaire à la figure 2A, où la paroi frontale avant est en position horizontale, pour permettre l'opération de gavage ;
La figure 3 est une vue de dessus en perspective montrant une série de parcs pourvus de moyen de séparation mobile ;
La figure 4 est une vue de face d'une paroi latérale commune à deux parcs contigus ;
La figure 5 est une vue en perspective latérale d'une paroi latérale commune de deux parcs et montrant une gouttière centrale ;
La figure 6 montre une vue en perspective de l'abreuvoir central.

Dans la description qui suit, on se réfère à des opérations de gavage de canards, étant entendu que l'invention est applicable à tout type de palmipèdes pour des opérations de gavage ou similaires.

Les termes avant, frontal, latéral, arrière se réfèrent aux positions des éléments ainsi qualifiés par rapport à une utilisation normale, l'utilisateur faisant face au parc en question. De même, les termes horizontal et vertical se réfèrent à une disposition par rapport au sol qui est supposé horizontal. Enfin, le terme longitudinal se réfère à une direction de plus grande dimension d'un parc, et également à la direction de l'alignement de parcs successifs.

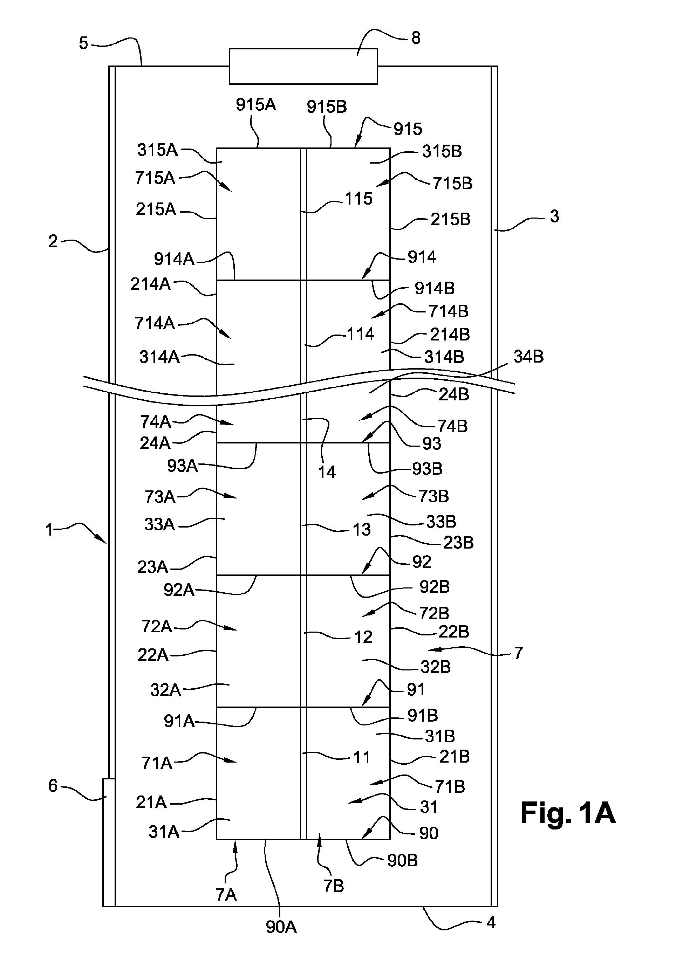

La figure 1A montre une vue de dessus schématique d'une installation selon l'invention, destinée au gavage de palmipèdes et particulièrement des canards, l'installation étant disposée dans un local, dont la surface au sol est rectangulaire. Le local comporte deux murs latéraux 2 et 3 de grande longueur, et un mur avant 4 et un mur de fond 5 de plus petite longueur que les murs latéraux 2 et 3. Le mur latéral 2 comporte une porte d'accès 6. Le local est de construction classique et comporte des fenêtres ou équivalents (non représentées).

Dans le local 1, est disposée l'installation 7 selon l'invention qui comporte deux séries de parcs 7A et 7B alignées les uns à la suite des autres, les parcs de la série 7A ayant un coté commun avec les parcs de la série 7B. Chaque alignement 7A, 7B comporte une quinzaine ou une vingtaine de parcs successifs.

A titre d'exemple montré sur la figure 1A, la série 7A comporte les parcs successifs 71A, 72A, 73A, 74A....714A et 715A. La série 7B comporte des parcs successifs ayant une référence comportant l'indice B.

Chaque parc a une surface au sol rectangulaire dont le grand côté est dans le prolongement de l'alignement et est parallèle aux murs latéraux 2 et 3 du local 1. Chaque parc peut contenir entre 6 et 12 canards, selon les dimensions.

Des moyens de ventilation 8, connus en eux-mêmes sont prévus sur le mur arrière 5, permettant l'aspiration de l'air dans le local pour l'évacuer vers l'extérieur. Le mur frontal opposé 4 est pourvu d'ouvertures sous la forme d'une structure en nid d'abeilles ou alvéolée, ou de tout autre matériaux connus, permettant d'isoler le local de l'extérieur, tout en laissant pénétrer l'air, qui est aspiré par les moyens de ventilation 8. Ces derniers sont commandés soit manuellement soit automatiquement en fonction de paramètres divers tels que la température, ou par une minuterie.

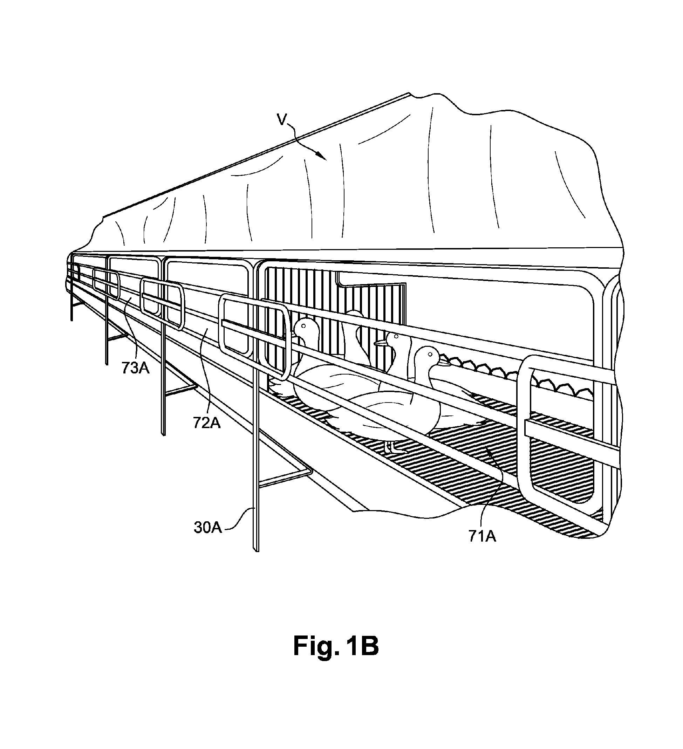

La figure 1B montre une vue en perspective de côté d'une série de parcs, en l'occurrence la série 7A, chaque parc 71A, 72A, 73A,....., contient dix canards.

La structure des parcs est telle qu'elle associe deux parcs, à savoir les couples 71A-71B, 72A-72B, etc, qui sont jointifs par une paroi de fond ou arrière 11, 12, 13, 14, ....., 114, 115, qui est donc commune à deux parcs d'un même couple. De préférence, la paroi arrière est pleine.

Chaque parc comporte une paroi avant 21A, 22A, 23A, 24A,...., 214A, 215A, pour la série de parcs 7A et une paroi avant ou frontale 21B, 22B, 23B, 24B,.....,214B et 215B, pour la série de parcs 7B.

Les parois de fond, 11, 12, 13, etc, d'une part, et les parois avant ou frontale 21A, 21B, 22B, etc, représentent les grands côtés du rectangle de chaque parc et ont une longueur d'environ 1,60 m.

Chaque parc comporte deux parois latérales de plus petite dimension (environ 0,75 m en longueur), à savoir, pour la série 7A : parois latérales 90A, 91A, 92A, 93A,....., 914A et 915A, et pour la série 7B, les parois latérales 90B, 91B, 92B, 93B,....., 914B et 915B.

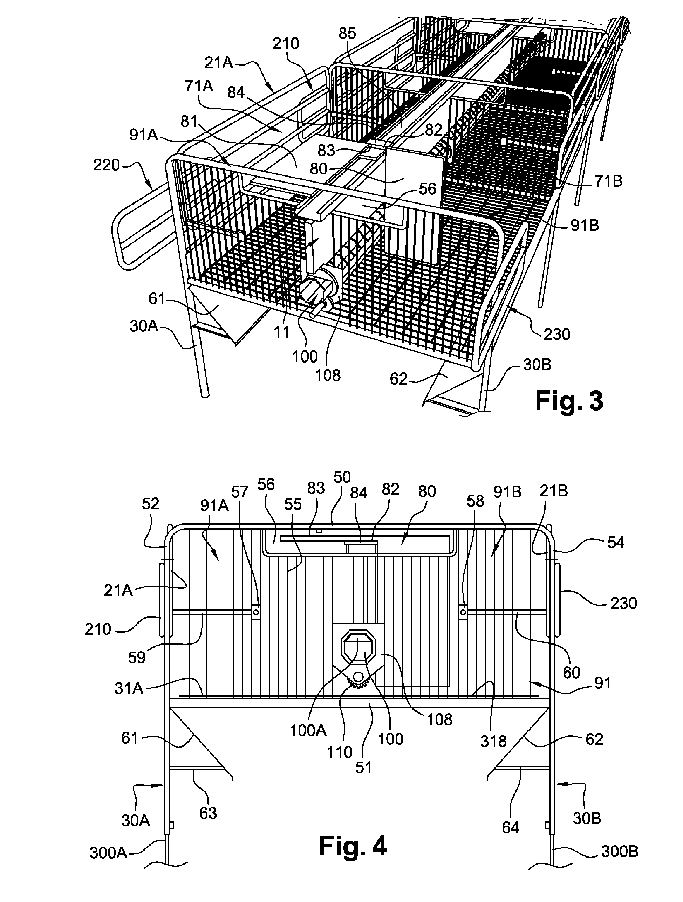

Les parois latérales de deux parcs jointifs d'une série à l'autre sont alignées l'une avec l'autre. Plus précisément, les deux parois latérales d'un même couple de parc sont en réalité constituées d'un seul et même élément monobloc, représenté de face sur la figure 4. Chaque paroi commune est ainsi référencé 90, 91, 92, 93, ....., 914 et 915.

Par exemple, la paroi commune 90 comprend une partie 90A formant une paroi latérale d'un parc 71A et une partie 90B formant une paroi latérale du parc voisin 71B.

Comme montré sur les figures 1B et 4, l'installation repose à une certaine distance du sol par l'intermédiaire de piètements. Chaque paroi latérale commune 90, etc comporte ainsi deux piètements 30A et 30B.

Sur la figure 1B, il est montré un panneau souple V sur le dessus des parcs, afin de canaliser l'air qui est aspiré par les moyens de ventilation 8. Le panneau souple V est susceptible d'être déployé ou replié selon les besoins. Ceci est un exemple des différents systèmes de ventilation

Chaque parc comporte en outre un fond constitué d'une plaque grillagée à mailles suffisamment serrées pour que les pattes de canards ne puissent pas passer au travers ou ne s'y coincent pas. La série de parcs 7A comporte ainsi les planchers 31A, 32A, 33A, 34A, ....., 314A et 315A, tandis que la série de parcs 7B comporte les planchers 31B, 32B, 33B, 34B, ....., 314B et 315B.

De fait, les planchers 31A et 31B, des parcs 71A et 71B qui sont jointifs par leur paroi arrière commune 11 (figure 1A) sont constitués d'une seule et même plaque grillagée référencée 31.

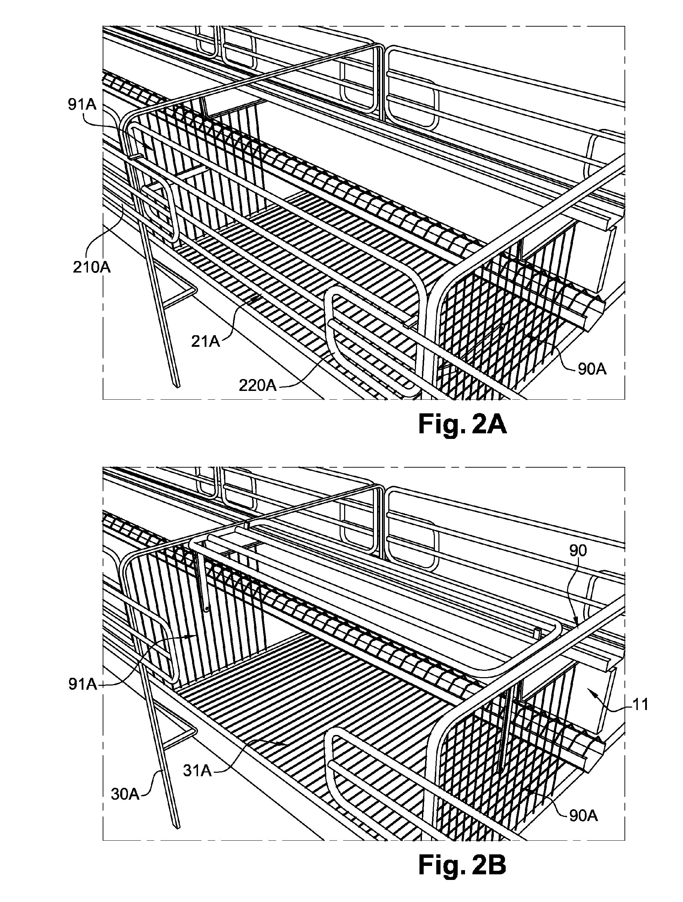

On décrit plus en détail, ci après, en référence aux figures 2A et 2B un parc selon l'invention, tel que le parc 71A.

On retrouve sur ces deux figures les éléments décrits précédemment, à savoir les parois frontales, les parois latérales, les parois de fond et le plancher, ainsi que le piètement.

La face avant ou frontale de chaque parc comporte :
- une paroi frontale 21A ; et
- une barrière frontale gauche 210A et une barrière frontale droite 220A.

Les parois frontales 21A et les barrières 210A et 220A sont réalisées en éléments tubulaires métalliques, an acier zingué, aluminium ou tout autre matériau. La paroi frontale 21A comporte ainsi un cadre rectangulaire à coins arrondis, et deux barres longitudinales, espacées régulièrement en hauteur pour constituer une barrière empêchant les canards de passer au travers. La paroi latérale 21A comporte des dimensions en hauteur et en longueur sensiblement équivalentes ou très légèrement inférieures à la face frontale avant du parc correspondant, délimité par la distance séparant les deux parois latérales 90A et 91A.

Les barrières frontales gauche 210A et droite 220A sont constituées également d'éléments tubulaires. Avantageusement, les barrières sont constituées d'un cadre rectangulaire à coins arrondis, et d'une barre médiane. La barrière (incluant ledit cadre et ladite barre) forment un élément unique commun à deux parcs jointifs d'une même série, dans l'alignement l'un de l'autre, par exemple les parcs 71A et 72A (figure 1A).

Ainsi, chaque élément de barrière commun est fixé sensiblement en son milieu, par des moyens connus, sur l'arrête frontale de chaque paroi latérale. Chaque barrière dépasse de part et d'autre de ladite paroi latérale, selon une distance d'environ 0,40 m.

Comme montré sur les figures 2A et 2B, cette conception permet de dégager, entre les deux barrières, un espace sensiblement central, d'une longueur de l'ordre de 0,8 à 1 m.

Chaque paroi frontale 21A est montée mobile en rotation, entre deux positions extrêmes, à savoir :
- une première position (figure 2A) où la paroi frontale est dans le plan de la face frontale du parc correspondant, et ferme donc ce dernier, la paroi frontale 21 A étant située à proximité et en avant des barrières frontales 210A et 220A qui sont fixes ;
- une seconde position (figure 2B) où la paroi 21A est en position horizontale et couvre et referme en partie le parc dans sa partie supérieure.

La première position est dite de repos dans la mesure où elle permet de fermer le parc et donc empêcher les canards de sortir, tandis que la seconde position (figure 2B) permet l'opération de gavage en permettant à l'opérateur d'accéder aux canards.

On note que dans cette position dite de gavage (horizontale de la paroi frontale), les barrières frontales 210A et 220A permettent de clore partiellement le parc sur la face frontale du parc, pour empêcher les canards de sortir, puisque l'opérateur se place sensiblement dans l'ouverture de dégagement laissés entre les deux bords distaux des barrières frontales.

En référence à la figure 4, on décrit ci après plus particulièrement un élément unitaire 91 formant deux parois latérales 91A et 91B de deux parcs jointifs (par exemple 71A et 71B).

L'élément de double paroi latérale 91 comporte un cadre métallique rectangulaire comprenant une base horizontale 51, une barre supérieure 50, et deux barres latérales 52 et 54 verticales, ainsi qu'une série de barreaux parallèles verticaux 55, de diamètre plus fin que les éléments constitutifs du cadre (50 à 54).

Une ouverture 56 est prévue en partie supérieure de l'élément de paroi latérale 91, l'ouverture étant de forme générale rectangulaire et délimitée par un élément en U, et présentant une hauteur de l'ordre de 10 cm et de longueur (dans le sens horizontal) d'environ 75 cm. Le rôle de cette ouverture 56 est explicité ultérieurement.

Sur les montants verticaux 52, 54 de la paroi latérale 91 sont fixées des barrières frontales 210 et 230..

Les parois frontales 21A et 21B sont représentées en position de repos (comme sur la figure 2A).

Les parois frontales 21A et 21B sont montées articulées sur l'élément de paroi latérale 91 par un pivot de rotation, respectivement 57 et 58, fixé sur deux barreaux successifs de l'élément 91. Un bras 59, respectivement 60 est articulé sur les pivots respectifs 57 et 58, par son extrémité distale, et son extrémité proximale est fixée sur la paroi frontale mobile, respective 21A et 21B, et ce sensiblement au 1/5^{ème} ou au ¼ de sa hauteur à partir du bas (dans la position représentée sur la figure 4, c'est-à-dire position verticale des parois latérales 21A et 21B).

Les pieds 30A et 30B, fixés à la base de l'élément de paroi latérale 91, sont dans le prolongement des côtés verticaux 52 et 54 du cadre formant ledit élément 91. Chaque pied est associé à sa base à une tige télescopique, 300A et 300B, susceptible de coulisser dans le piètement respectif, afin de permettre le réglage de la hauteur par rapport au sol de l'élément de paroi 91.

En outre, deux déflecteurs en tôle, respectivement 61 et 62, de forme rectangulaire allongée, sont fixées en position oblique à 45°, par un premier bord vertical au coin inférieur du cadre, et par leur bord inférieur à une patte, respectivement 63 et 64, horizontale et fixée sur le piètement 30A, respectivement 30B. Ces déflecteurs ont pour objet de dévier les déjections des animaux qui passent au travers des planchers grillagés 31A et 31B (figure 2A et 2B) pour que les déjections tombent sur le sol dans une partie sensiblement centrale de l'installation. Les tôles déflectrices 61 et 62 présentent une hauteur (vu dans le plan vertical de la figure 4) d'environ 30 à 35 cm.

De même, les piètements 30A et 30B ont une longueur d'environ 60 cm, et les tiges télescopiques 300A et 300B une longueur d'environ 30 cm.

Typiquement, l'installation repose sur le sol de manière que le plancher de chaque parc soit disposé à une hauteur, par rapport au sol, adaptée à la taille de l'opérateur, de préférence de l'ordre de 0,9 m..

La figure 3 montre une partie de l'installation en perspective où l'on retrouve les différents éléments décrits plus haut portant les mêmes références.

L'installation est par ailleurs remarquable en ce qu'elle comporte des moyens permettant de diviser chaque parc en deux parties de volumes variables, chaque partie représentant entre environ 0% et environ 100% du volume du parc.

Ces moyens, particulièrement visibles sur les figures 3 et 4, comportent au moins un panneau mobile 80.

Chaque panneau séparateur 80, 81 est mobile selon deux mouvements distincts.
- Un mouvement de translation dans un plan vertical, selon une direction longitudinale colinéaire à l'alignement des parcs, et parallèlement aux parois frontales et arrière des parcs. Pour se faire, chaque panneau est solidaire d'un bras, respectivement 82, 83 horizontal. L'extrémité proximale du bras 82, 83 (du côté de la paroi arrière 11) est solidaire d'un chariot ou coulisseau 84 lui-même coopérant avec un rail 85 longitudinal, fixé sur l'arrête supérieure de la paroi arrière 11. Le chariot est apte à coulisser (ou rouler) dans le rail.
- Un mouvement de rotation autour de son arbre 82, 83 respectif, horizontal et transversal à la direction longitudinale de l'alignement des parcs. Plus précisément, les panneaux 80 et 81 sont libres en rotation autour de leur arbre respectif, sans contrainte autre que la gravité.

Sur la figure 3, les deux panneaux 80 et 81 sont représentés dans une position, selon leur déplacement linéaire, sensiblement au milieu du parc correspondant 71B, 71A. Par ailleurs, la figure 3 représente à titre d'exemple le panneau 80 en position verticale, et le panneau 81 en position horizontale. Ceci correspond par ailleurs à la représentation de la figure 4 (vue de face).

Le fonctionnement du dispositif, au regard de la description qui précède, est le suivant.

L'opérateur, dans un premier temps, s'approche du premier parc d'une série alignée, par la façade frontale dudit parc, et se positionne de manière sensiblement centrale, donc entre les barrières 210A et 220A. Ceci correspond à la position de la figure 2A, où la paroi frontale 21A est abaissée, fermant ainsi le parc correspondant. En ce début d'étape, le panneau séparateur mobile 80 est amené en position sensiblement médiane du parc, dans le sens longitudinal, correspondant à la position de la figure 3.

Dans un second temps, l'opérateur fait pivoter la paroi frontale 21A pour l'amener en position supérieure de couverture, horizontale et montrée sur la figure 2B.

Pour des raisons de clarté, les figures 2A et 2B ne représentent pas les panneaux mobiles et leurs éléments associés.

Dans cette configuration, les canards, en vue de face, sont groupés sur la partie gauche du parc, étant ainsi confinés dans un espace délimité par la paroi latérale 91A, la barrière gauche 210A, la paroi arrière 11, et le panneau séparateur 80, immobile et en position verticale.

Ensuite, l'opérateur saisi un canard par le cou, à l'aide d'une main

De son autre main, l'opérateur introduit la canule (non représentée) dans le bec et le cou du canard, procède à l'acte de gavage, et retire la canule.

L'opérateur alors déplace le canard en le maintenant par le cou vers la partie droite du parc, délimitée par l'autre paroi latérale du parc, et le panneau séparateur 80, immobile.

L'opérateur poursuit ainsi ses opérations pour chaque canard suivant, en prenant un canard dans la partie gauche de ceux qui sont à gaver, pour, une fois le gavage réalisé, déplacer le canard gavé dans l'autre partie du parc (à droite).

Une fois que tous les canards ont subi un acte de gavage, et qu'ils se trouvent donc dans la partie droite du parc, l'opérateur fait pivoter la paroi frontale 21A d'un mouvement inverse pour la ramener en position verticale de fermeture, montrée sur la figure 2A.

L'opérateur se déplace au parc suivant. Pendant ce déplacement, soit de manière automatisée, soit déclenché par l'opérateur lui-même, le panneau 80 est déplacé en translation vers ledit parc suivant, c'est-à-dire à l'opposé et en s'éloignant du groupe de canards qui sont déjà gavés.

Le panneau séparateur 80 vient alors en butée contre la paroi latérale gauche. Le mouvement de translation du chariot 84, du bras 82 et du panneau 80 se poursuit. Le chariot et le bras passent au travers de l'ouverture 56 prévue dans la partie haute de la paroi latérale, ce qui provoque le basculement et la rotation du panneau 80 sur son bras 82, pour reposer sur le bord inférieur de la fenêtre 56.

Le mouvement de translation du chariot 84 se poursuit jusqu'à ce que le panneau 80 ne repose plus sur le bord inférieur de la fenêtre 56 et bascule donc, par gravité, vers sa position verticale. Il se trouve alors sensiblement au milieu du parc suivant.

A cet instant, dans la mesure où la simultanéité et la synchronisation du déplacement du panneau mobile d'une part, et de l'utilisateur d'un parc à l'autre, d'autre part, sont réalisées de manière adéquate, au moment où le panneau 80 mobile séparateur arrive en position médiane du parc suivant, l'opérateur est déjà en place en face de ce parc. Le mouvement du panneau mobile 80 a provoqué le regroupement des canards sur la partie gauche dudit parc suivant.

Un nouveau cycle peut donc recommencer.

La forme et la surface de chaque panneau sont telles qu'elles permettent de :
- séparer un parc en deux parties (volume variable par la translation du panneau) ;
- empêcher (à tout le moins dissuader) les canards de passer d'une partie à l'autre d'un même parc ;
- ne pas gêner l'opérateur ;
- laisser un passage suffisant au canard qui vient d'être gavé, depuis la partie aval où il se trouve (proche des canards en attente de gavage), vers la partie amont où se trouvent les canards du même parc, déjà gavés.

La forme rectangulaire des panneaux est préférée.

De même, la hauteur de chaque panneau séparateur mobile est inférieure, et entre 40 % et 100% de la hauteur du parc (hauteur des parois latérales et arrière).

Il en est de même de la largeur de chaque panneau (dans le sens transversal, parallèlement aux parois latérales), qui est inférieure, et entre 40 % et 100% de la profondeur du parc (largeur des parois latérales).

A titre d'exemple, chaque panneau, qui peut être en bois, plastique ou métal léger, présente des dimensions de l'ordre de 60 cm x 35 cm. L'installation de l'invention comporte également un abreuvoir en forme de gouttière, pour l'alimentation en eau des canards, disposé en position basse sous les parois arrières 11, 12, etc..., et décrit ci-après au regard des figures 4, 5 et 6.

L'abreuvoir 100 est constitué d'une gouttière unique ouverte vers le haut, en tôle inox, ou en plastique, etc, et comprenant plusieurs sections, vue en coupe transversale ;
- Un fond comportant :
   o Une section horizontale 101,
   o Deux sections obliques latérales 102, 103
- Deux flancs latéraux verticaux 104, 105.

Il est prévu, sur la gouttière, une structure filaire, en forme de grille 106, comportant des arceaux en U (dont la concavité est tournée vers le sol), régulièrement espacés parallèlement les uns aux autres, par exemple de l'ordre de 15 à 25 cm entre deux arceaux voisins. Les arceaux sont fixés sur l'arête supérieure de chaque flanc latéral 104, 105 de la gouttière, et recouvrent l'abreuvoir, de manière à empêcher les ailes des canards de pénétrer dans la gouttière (lorsque les canards battent des ailes). La grille permet ainsi d'éviter des projections d'eau sur l'opérateur pendant l'acte de gavage.

De plus, la structure de grille permet de conserver la totalité de la surface au plancher pour les animaux, contrairement aux installations de l'art antérieur dans lesquelles il est prévu un grillage vertical de part et d'autre de l'abreuvoir, qui limite donc la surface au sol de chaque parc.

En outre, l'abreuvoir 100 est monté en rotation selon son axe longitudinal.

A cette fin, des flasques 100A de forme circulaire extérieure, et évidés selon la section de l'abreuvoir, sont fixés à ce dernier, de manière régulièrement espacée, à l'aplomb de chaque paroi latérale.

Sur chaque paroi latérale est fixée un platine 108, évidée selon le diamètre des flasques 100A.

Chaque flasque 100A est monté dans l'évidement central de chaque platine de manière à ne posséder qu'un degré de liberté, à savoir la rotation du flasque par rapport à la platine fixe, selon un axe longitudinal horizontal.

Ainsi, l'abreuvoir est rotatif par rapport à chaque platine.

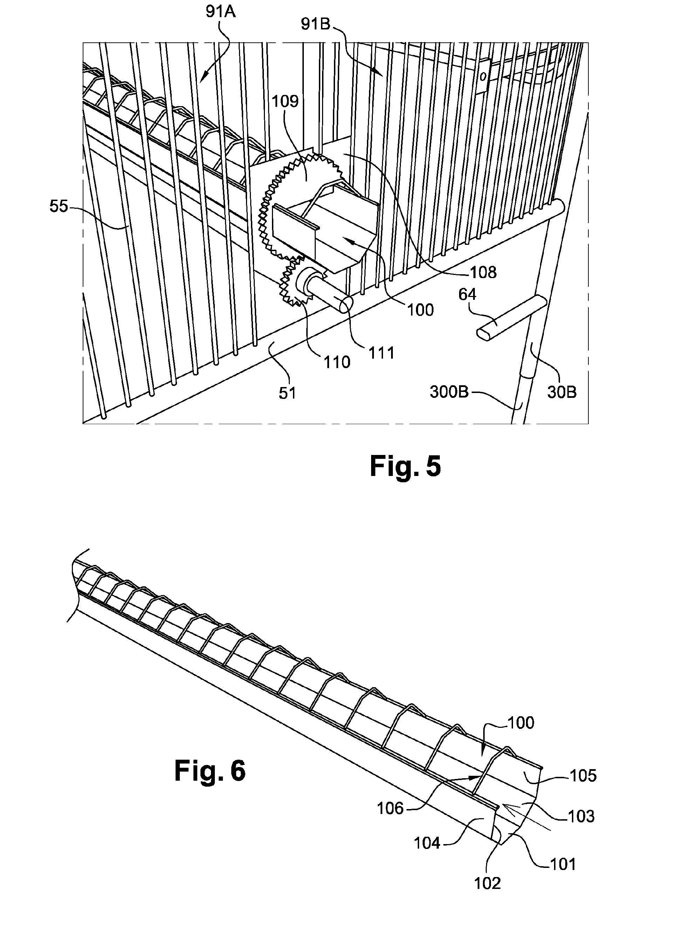

Comme montré sur la figure 5, l'entrainement en rotation de l'abreuvoir est réalisé par l'intermédiaire :
- d'une couronne dentée 109 solidaire du flasque et donc de l'abreuvoir ;
- d'un pignon 110 (coopérant avec ladite couronne) monté sur un arbre longitudinal 111.

Il est prévu un ensemble couronne/pignon pour chaque ensemble flasque/platine, l'arbre 111 étant unique d'un bout à l'autre de l'installation.

L'arbre 111 est relié de manière connue (non représentée) à des moyens moteurs non représentés), aptes à faire faire audit arbre une portion de tour (par exemple ¼ de tour), entrainant ainsi l'abreuvoir selon ce même ¼ de tour. Ceci provoque la vidange de l'abreuvoir, afin de le nettoyer, et le remplir d'eau fraiche et propre.

## Revendications

1. Installation pour le gavage de palmipèdes, notamment des canards, comportant au moins un parc (7A, 7B) destiné à contenir plusieurs palmipèdes , chaque parc comportant une paroi avant (21A, 22A), une paroi arrière (11, 12), deux parois latérales (90A, 91A), un plancher (31A, 32A), et au moins un panneau mobile (80) entre les deux parois latérales du parc en translation suivant une direction transversale aux parois latérales, ledit panneau mobile (80) étant apte à diviser ledit parc en deux sous-parties, de volumes variables, **caractérisée en ce qu'il** est prévu un seul panneau mobile (80) séparateur pour l'ensemble des parcs successifs alignés de l'installation, ledit panneau mobile étant apte à passer d'un parc à l'autre (71A, 72B).

2. Installation selon la revendication 1, **caractérisée en ce que** le passage du panneau mobile (80) d'un parc à l'autre est réalisé par l'intermédiaire d'une ouverture (56) prévue dans chaque paroi latérale (91A) correspondante commune à deux parcs successifs (72A, 72B).

3. Installation selon l'une des revendications 1 à 2, **caractérisée en ce que** le panneau mobile (80) est monté à rotation sur l'un de ses bords, suivant un axe (82, 83) parallèle aux parois latérales.

4. Installation selon l'une des revendications 1 à 3, **caractérisé en ce que** chaque sous-partie représentant entre environ 0 et environ 100% du parc (71A).

5. Installation selon l'une des revendications 1 à 4, **caractérisée en ce que** le panneau mobile (80) présente une surface inférieure à celle des parois latérales, et de préférence à la moitié de la surface des parois latérales.

6. Installation selon l'une des revendications 1 à 5, **caractérisée en ce que** le panneau arrière (11, 12) et le panneau mobile (80) présentent une surface pleine.

7. Installation selon l'une des revendications 1 à 6, **caractérisée en ce que** le déplacement dudit panneau mobile (80) est réalisé, soit de manière automatique en fonction du déplacement de l'opérateur, ou soit déclenché par l'opérateur lui-même.

8. Installation selon l'une des revendications 1 à 7, **caractérisée en ce que** le parc comporte une paroi frontale mobile (21A) entre une position de gavage permettant à l'opérateur de réaliser l'opération de gavage et saisir les canards, et une position de repos, de manière à fermer le parc pour empêcher les canards de s'échapper.

9. Installation selon la revendication 8, **caractérisée en ce que** la paroi frontale (21A) est articulée selon un axe (57) de rotation horizontal transversal aux deux parois latérales (90A, 91A) du parc (71A).

10. Installation selon l'une des revendications 1 à 9, **caractérisée en ce que** chaque parc (71A) est pourvu en sa face frontale de deux barrières frontales fixes (210A, 220A), dont les dimensions en longueur (dans le plan de la paroi frontale) sont sensiblement inférieures à cette dernière et de l'ordre de 1/5^{ème} à ¼ de ladite longueur.

11. Installation selon la revendication 10, **caractérisée en ce qu'**une barrière est prévue de chaque côté du parc, dans le plan de la façade frontale.

12. Installation selon l'une des revendications 1 à 11, **caractérisée en ce qu'**elle comporte un abreuvoir central formé d'une gouttière unique (100), commune à l'ensemble des parcs alignés, la gouttière étant montée à rotation selon un axe longitudinal, parallèle au parois arrière et frontale du parc.

13. Installation selon la revendication précédente, **caractérisée en ce que** la gouttière (100) est recouverte d'une grille (106).
